# EUROPÄISCHE PATENTSCHRIFT

(11) **EP 3 401 742 B1**
(45) Veröffentlichungstag und Bekanntmachung des Hinweises auf die Patenterteilung: **02.09.2020**
(21) Anmeldenummer: 17170187.3
(22) Anmeldetag: 09.05.2017
(51) Int. Cl.: G05B 19/042

(54) **AUTOMATISIERUNGSSYSTEM UND VERFAHREN ZUM BETRIEB**
AUTOMATION SYSTEM AND METHOD FOR OPERATING SAME
SYSTÈME D'AUTOMATISATION ET PROCÉDÉ DE FONCTIONNEMENT

(43) Veröffentlichungstag der Anmeldung: 14.11.2018
(73) Patentinhaber: Siemens Aktiengesellschaft, 80333 München (DE)
(72) Erfinder: Weber, Tobias, 09212 Limbach-Oberfrohna (DE); Schneider, Dirk, 08115 Lichtentanne (DE); Zschoppe, Claudia, 09112 Chemnitz (DE)

(56) Entgegenhaltungen:
- EP-A1- 2 682 827

## Beschreibung

Die Erfindung betrifft ein Automatisierungssystem umfassend eine erste Steuereinrichtung mit einem ersten Feldbusanschluss, eine zweite Steuereinrichtung mit einem zweiten Feldbusanschluss, einem Feldbus, eine Peripheriebaugruppe mit zumindest einem Ein-/Ausgangs-Peripheriemodul zum Anschluss von Sensoren und/oder Aktoren, wobei die Peripheriebaugruppe ein Schnittstellenmodul mit einem dritten Feldbusanschluss für eine Kommunikation zu und/oder von den Steuereinrichtungen aufweist, wobei das Schnittstellenmodul zumindest ein Ein-/Ausgangsmodul aufweist, in welchem Verschaltungsinformationen hinterlegt sind, wobei die Verschaltungsinformationen eine Zuordnung von Ein-/Ausgängen des oder der Ein-/Ausgangs-Peripheriemodule zu den Steuereinrichtungen beschreiben.

Ausgangsbasis für die Erfindung ist ein Automatisierungssystem bzw. ein Feldbussystem mit einem zyklischen Austausch von Ein- und Ausgangsdaten zwischen mehreren Kommunikationsteilnehmern, typischerweise speicherprogrammierbaren Steuerungen und Peripheriesystemen.

Die EP 2 682 827 A1 offenbart ein Automatisierungssystem mit einem Eingabegerät und mehreren Steuerungen, wobei in dem Eingabegerät ein Kopiermittel und mehrere Speicherbereiche vorgesehen sind und das Kopiermittel Prozess-Signalabbilder in die Speicherbereiche kopiert und die Steuerungen auf die ihnen zugeordneten Speicherbereiche zugreifen können.

Ein direkter zyklischer Datenaustausch zwischen mehreren speicherprogrammierbaren Steuerungen, welche beispielsweise für eine Kopplung von Maschinen einer Produktionslinie notwendig ist, wird von derartigen Systemen nicht unterstützt, da Kommunikationsbeziehungen nur zwischen den speicherprogrammierbaren Steuerungen und den Peripheriesystemen aufgebaut werden.

Es ist Aufgabe der Erfindung, eine einfache, flexible und leistungsfähige Feldbuskommunikation zwischen mehreren speicherprogrammierbaren Steuerungen zu realisieren.

Für das eingangs genannte Automatisierungssystem wird die Aufgabe dadurch gelöst, dass das Schnittstellenmodul zusätzlich ein virtuelles Datensatzmodul aufweist, in welchem der ersten Steuereinrichtung ein Datensatz-Empfangsmodul zugeordnet ist, in welches die erste Steuereinrichtung einen Datensatz schreiben kann, und weiterhin der zweiten Steuerung innerhalb des virtuellen Datensatzmoduls ein Datensatz-Sendemodul zugeordnet ist, von welchem die zweite Steuereinrichtung den Datensatz abholen kann, dabei ist das virtuelle Datensatzmodul derart ausgestaltet, dass der Datensatz aus dem Datensatz-Empfangsmodul in das Datensatz-Sendemodul kopiert wird, wodurch ein Kommunikationspfad zwischen den Steuereinrichtungen realisiert ist. Die Ein-/Ausgangsmodule kann man sich als einen konfigurierbaren Speicherbereich vorstellen, in welchem bei der Verbindung auf einer Steuereinrichtung zum Schnittstellenmodul entsprechende Konfigurationsdaten übertragen werden. Die virtuellen Datensatzmodule kann man sich als einen konfigurierbaren Speicherbereich vorstellen, in welchem bei der Verbindung mit einer Steuereinrichtung zum Schnittstellenmodul entsprechende Konfigurationsdaten übertragen und gespeichert werden. Demnach weist das Schnittstellenmodul gemäß der Erfindung zwei Arten von Modulen auf, nämlich die Ein- und Ausgangsmodule für die eigentliche Peripherie und ein oder mehrere virtuelle Datensatzmodule für eine Kommunikation der Steuereinrichtungen untereinander.

Durch eine Nutzung von Mehrfachzugriffen auf Datensatzkanäle eines Peripheriesystems, wie z.B. bei Profinet Shared Device, und die Verwendung von virtuellen Datensatzmodulen im Peripheriesystem, insbesondere in dem Schnittstellenmodul, wird eine Inter-PLC-Kommunikation realisiert, was bedeutet, dass die Steuereinrichtungen untereinander über das virtuelle Datensatzmodul Datensätze (Records) austauschen können. Dabei werden die Datensätze einer schreibend zugreifenden Steuereinrichtung in ein virtuelles Datensatz-Empfangsmodul des Schnittstellenmoduls geschrieben und über ein Datensatz-Sendemodul einer weiteren Steuereinrichtung oder sogar mehreren weiteren Steuereinrichtungen zugeordnet.

Die eingangs genannte Aufgabe wird ebenso durch ein Verfahren zum Betrieb eines Automatisierungssystems gelöst. Bei dem Verfahren zum Betrieb eines Automatisierungssystems tauschen eine erste und eine zweite Steuereinrichtung über einen Feldbus mit einer Peripheriebaugruppe Daten aus, wobei der Datenaustausch sich zum einen auf das Senden von Ausgangsdaten zum Peripheriemodul bezieht, wobei über ein Ein-/Ausgangsmodul in einem Schnittstellenmodul der Peripheriebaugruppe einem Ein-/Ausgangs-Peripheriemodul die Ausgangsdaten übergeben werden, und zum anderen auf ein Empfangen von Eingangsdaten vom Peripheriemodul bezieht, wobei über das Ein-/Ausgangsmodul in dem Schnittstellenmodul der Peripheriebaugruppe von dem Ein-/Ausgangs-Peripheriemodul die Eingangsdaten entgegengenommen werden.

Erfindungsgemäß wird in dem Schnittstellenmodul ein virtuelles Datensatzmodul betrieben, in welchem der ersten Steuereinrichtung ein Datensatz-Empfangsmodul zugeordnet wird, in welches die erste Steuereinrichtung einen Datensatz schreiben kann, und weiterhin der zweiten Steuereinrichtung ein Datensatz-Sendemodul zugeordnet wird, von welchem die zweite Steuerung den Datensatz abholen kann, dabei wird in dem virtuellen Datensatzmodul der Datensatz der ersten Steuereinrichtung aus dem Datensatz-Empfangsmodul als ein Datensatz für die zweite Steuereinrichtung in das Datensatz-Sendemodul kopiert.

In einer vorteilhaften Weiterbildung des Verfahrens wird durch die Zuordnung des Datensatz-Empfangsmoduls zur ersten Steuereinrichtung für die erste Steuereinrichtung ein erster Kanal gebildet, und durch die Zuordnung des Datensatz-Sendemoduls zur zweiten Steuereinrichtung ein zweiter Kanal für die zweite Steuereinrichtung gebildet, wobei die erste Steuereinrichtung über eine Datenübertragungsstrecke, welche den ersten Kanal und den zweiten Kanal aufweist mit der zweiten Steuereinrichtung über das Peripheriemodul kommuniziert.

Mit einer Nutzung von Mehrfachzugriffen auf Ein-/Ausgangskanäle des Peripheriemoduls, wie es beispielsweise bei PROFINET Share Device durchgeführt wird und die Verwendung des virtuellen Datensatzmoduls in der Peripheriebaugruppe bzw. den Peripheriemodul wird eine direkte Kommunikation von einer Steuereinrichtung zu einer anderen Steuereinrichtung (Inter PLC-Kommunikation) realisiert.

Aus Sicht einer auf Daten zugreifenden Steuereinrichtung handelt es sich dabei immer um eine Punkt-zu-Punkt-Kommunikation zwischen zwei Feldbusteilnehmern. Eine Nutzung und eine Aufteilung der durch das virtuelle Datensatzmodul zur Verfügung gestellten zusätzlichen Kommunikationskanäle für Datensätze obliegen der Verantwortung der Steuerungsapplikationen. Beispielsweise wird ein Übertragen von Datensätzen, Parameter- und Status-Informationen einer Steuerungsapplikation auf eine andere Steuereinrichtung ermöglicht.

Eine Implementierung des Verfahrens könnte als eine Softwarelösung im Schnittstellenmodul der Peripheriebaugruppe erfolgen und hätte den Vorteil, dass keine zusätzlichen Feldbusbaugruppen, wie z.B. Profinet-Profinet-Koppler, und keine zusätzlichen Verdrahtungen für eine PLC-PLC-Kommunikation benötigt werden. Dies wird als ein Kostenvorteil angesehen, wenn eingesetzte Steuereinrichtungen weder eine C2C ("Controller to Controller Communication") noch eine CC-DX (I/O Controller Multicast Communication) unterstützen. Die Kommunikation zwischen den Steuereinrichtungen erfolgt über etablierte Feldbuskommunikationsmechanismen und stellt keine neuen Anforderungen an die bereits vorhandene Technik und die zugreifenden Komponenten.

Mit der Zeichnung wird ein Ausführungsbeispiel der Erfindung beschrieben. Es zeigt:
- FIG 1: ein Automatisierungssystem,
- FIG 2: ein virtuelles Datensatzmodul für den Zugriff von zwei Steuereinrichtungen und
- FIG 3: das virtuelle Datensatzmodul für den Zugriff von N-Steuerungen.

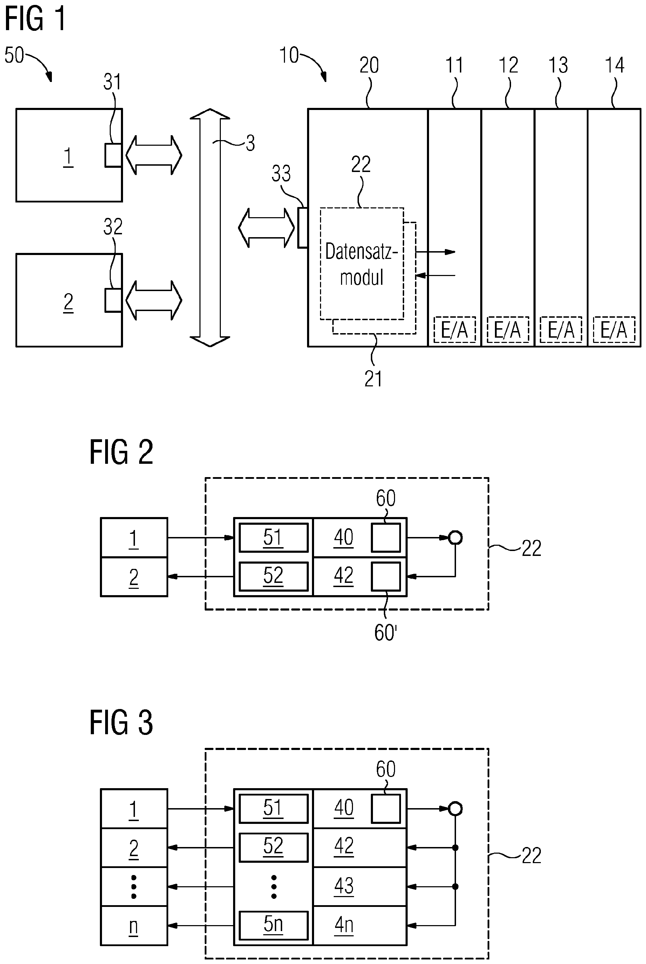

Gemäß der FIG 1 ist ein Automatisierungssystem 50 mit einer ersten Steuereinrichtung 1 und einer zweiten Steuereinrichtung 2 dargestellt. Die erste Steuereinrichtung 1 ist über einen ersten Feldbusanschluss 31 an einen Feldbus 3 angeschlossen. Die zweite Steuereinrichtung 2 ist über einen zweiten Feldbusanschluss 32 an den Feldbus 3 angeschlossen. Über einen dritten Feldbusanschluss 33 ist eine Peripheriebaugruppe 10 an den Feldbus 3 angeschlossen. Die Peripheriebaugruppe 10 weist ein Schnittstellenmodul 20 auf, an welches sich ein erstes Ein-/Ausgangs-Peripheriemodul 11, ein zweites Ein-/Ausgangs-Peripheriemodul 12, ein drittes Ein-/Ausgangs-Peripheriemodul 13 und ein viertes Ein-/Ausgangs-Peripheriemodul 14 anreiht. Die Ein-/Ausgangs-Peripheriemodule 11,12, 13,14 sind über einen Rückwandbus mit dem Schnittstellenmodul 20 verbunden. Über diesen internen Rückwandbus können die Ein-/Ausgangs-Peripheriemodule 11,12,13,14 Daten, insbesondere Eingangsdaten von Sensoren oder Ausgangsdaten zu Aktoren, mit dem Schnittstellenmodul 20 austauschen.

In dem Schnittstellenmodul 20 ist zumindest ein Ein-/Ausgangsmodul 21 vorhanden, in welchem Verschaltungsinformationen hinterlegt sind, wobei die Verschaltungsinformationen eine Zuordnung von Ein-/Ausgängen des oder der Ein/Ausgangs-Peripheriemodule 11,12,13,14 zu den Steuereinrichtungen 1,2 beschreiben.

Um nun eine direkte Kommunikation von der ersten Steuereinrichtung 1 zu der zweiten Steuereinrichtung 2 zu ermöglichen, weist das Schnittstellenmodul 20 ein virtuelles Datensatzmodul 22 auf, in welchem der ersten Steuereinrichtung 1 ein Datensatz-Empfangsmodul 40 (siehe FIG 2) zugeordnet ist, in welches die erste Steuereinrichtung 1 einen Datensatz 60 schreiben kann, und weiterhin ist der zweiten Steuereinrichtung 2 ein Datensatz-Sendemodul 42 zugeordnet, von welchem die zweite Steuereinrichtung 2 den Datensatz 60' abholen kann, dabei wird in dem virtuellen Datensatzmodul 22 der Datensatz 60 von der ersten Steuereinrichtung 1 aus dem Datensatz-Empfangsmodul 40 als ein Datensatz 60' für die zweite Steuereinrichtung 2 in das Datensatz-Sendemodul 42 kopiert.

Mit der FIG 2 ist das virtuelle Datensatzmodul 22 in einer Ausgestaltungsvariante für die Kommunikation zwischen der ersten Steuereinrichtung 1 und der zweiten Steuereinrichtung 2 dargestellt. Durch die Zuordnung des Datensatz-Empfangsmoduls 40 zu der ersten Steuereinrichtung 1 wird für die erste Steuereinrichtung 1 ein erster Kanal 51 gebildet. Durch die Zuordnung des Datensatz-Sendemoduls 42 zu der zweiten Steuereinrichtung 2 wird ein zweiter Kanal 52 für die zweite Steuereinrichtung 2 gebildet. Dabei kann die erste Steuereinrichtung 1 über eine Datenübertragungsstrecke, welche den ersten Kanal 51 und den zweiten Kanal 52 aufweist, direkt mit der zweiten Steuereinrichtung 2 über das Peripheriemodul 20 kommunizieren.

Wie FIG 3 zeigt, ist ebenso eine Kommunikation für N-Steuereinrichtungen möglich. Gemäß dem Beispiel nach FIG 3 stellt die erste Steuereinrichtung 1 über den ersten Kanal 51 den Datensatz 60 zur Verfügung. Der Datensatz 60 wird in das Datensatz-Sendemodul 42, und weiterhin in ein zweites Datensatz-Sendemodul 43,..., bis zu einem n-ten Datensatz-Sendemodul 4n kopiert. Dabei ist das Datensatz-Sendemodul 42 über den zweiten Kanal 52 der Steuereinrichtung 2 zugeordnet und das n-te Datensatzmodul 4n ist über einen n-ten Kanal 5n einer n-ten Steuereinrichtung n zugeordnet. Die erste Steuereinrichtung 1 kann somit als ein Sender für Datensätze dienen und die restlichen Steuereinrichtungen 2,...,n können als Empfänger der Datensätze über die entsprechenden Kanäle 52,...,5n für die Datensätze dienen.

## Patentansprüche

1. Automatisierungssystem (50) umfassend
- eine erste Steuereinrichtung (1) mit einem ersten Feldbusanschluss (31),
- eine zweite Steuereinrichtung (2) mit einem zweiten Feldbusanschluss (32),
- einen Feldbus (3),
- eine Peripheriebaugruppe (10) mit zumindest einem Ein-/Ausgangs-Peripheriemodul (11) zum Anschluss von Sensoren und/oder Aktoren, wobei die Peripheriebaugruppe (10) ein Schnittstellenmodul (20) mit einem dritten Feldbusanschluss (33) für eine Kommunikation zu und/oder von den Steuereinrichtungen (1,2) aufweist,
wobei das Schnittstellenmodul (20) zumindest ein Ein-/Ausgangs-Modul (21) aufweist, in welchem Verschaltungsinformationen hinterlegt sind, wobei die Verschaltungsinformationen eine Zuordnung von Ein-/Ausgängen des oder der Ein-/Ausgangs-Peripheriemodule (11) zu den Steuereinrichtungen (1,2) beschreiben,
**dadurch gekennzeichnet, dass** das Schnittstellenmodul (20) zusätzlich ein virtuelles Datensatzmodul (22) aufweist, in welchem der ersten Steuereinrichtung (1) ein Datensatz-Empfangsmodul (40) zugeordnet ist, in welches die erste Steuereinrichtung (1) einen Datensatz (60) schreiben kann, und weiterhin der zweiten Steuerung (2) innerhalb des virtuellen Datensatzmoduls (22) ein Datensatz-Sendemodul (42) zugeordnet ist, von welchem die zweite Steuereinrichtung (2) den Datensatz (60) abholen kann, dabei ist das virtuelle Datensatzmodul derart ausgestaltet, dass der Datensatz (60) aus dem Datensatz-Empfangsmodul (40) in das Datensatz-Sendemodul (42) kopiert wird, wodurch ein Kommunikationspfad zwischen den Steuereinrichtungen (1,2) realisiert ist.

2. Verfahren zum Betrieb eines Automatisierungssystems (50), wobei eine erste Steuereinrichtung (1) und eine zweite Steuereinrichtung (2) über einen Feldbus (3) mit einer Peripheriebaugruppe (10) Daten austauscht, wobei der Datenaustausch sich zum einen auf das Senden von Ausgangsdaten zum Peripheriemodul (20) bezieht, wobei über ein Ein-/Ausgangs-Modul (21) in einem Schnittstellenmodul (20) der Peripheriebaugruppe (10) einem Ein-/Ausgangs-Peripheriemodul (11) die Ausgangsdaten übergeben werden, und zum anderen auf ein Empfangen von Eingangsdaten vom Peripheriemodul (20) bezieht, wobei über das Ein-/Ausgangs-Modul (21) in dem Schnittstellenmodul (20) der Peripheriebaugruppe (10) von dem Ein-/Ausgangs-Peripheriemodul (11) die Eingangsdaten entgegengenommen werden,
**dadurch gekennzeichnet, dass** in dem Schnittstellenmodul (20) ein virtuelles Datensatzmodul (22) betrieben wird, in welchem der ersten Steuereinrichtung (1) ein Datensatz-Empfangsmodul (40) zugeordnet wird, in welchen die erste Steuereinrichtung (1) einen Datensatz (60) schreiben kann, und weiterhin der zweiten Steuereinrichtung (2) ein Datensatz-Sendemodul (42) zugeordnet wird, von welchem die zweite Steuerung (2) den Datensatz (60') abholen kann, dabei wird in dem virtuellen Datensatzmodul (22) der Datensatz (60) der ersten Steuereinrichtung (1) aus dem Datensatz-Empfangsmodul (40) als ein Datensatz (60') für die zweite Steuereinrichtung (2) in das Datensatz-Sendemodul (42) kopiert.

3. Verfahren nach Anspruch 2, wobei durch die Zuordnung des Datensatz-Empfangsmoduls (40) zur ersten Steuereinrichtung (1) für die erste Steuereinrichtung (1) ein erster Kanal (51) gebildet wird, und durch die Zuordnung des Datensatz-Sendemoduls (42) zur zweiten Steuereinrichtung (2) ein zweiter Kanal (52) für die zweite Steuereinrichtung (2) gebildet wird, wobei die erste Steuereinrichtung (1) über eine Datenübertragungsstrecke, welche den ersten Kanal (51) und den zweiten Kanal (52) aufweist, mit der zweiten Steuereinrichtung (2) über das Peripheriemodul (20) kommuniziert.

## Claims

1. Automation system (50), including
- a first control device (1) having a first field bus terminal (31),
- a second control device (2) having a second field bus terminal (32),
- a field bus (3),
- a peripheral assembly (10) having at least one input/output peripheral module (11) for connecting up to sensors and/or actuators, wherein the peripheral assembly (10) has an interface module (20) having a third field bus terminal (33) for communication to and/or from the control devices (1, 2),
wherein the interface module (20) has at least one input/output module (21) in which there is stored interconnect information, wherein the interconnect information describes an association between inputs/outputs of the one or more input/output peripheral modules (11) and the control devices (1, 2),
**characterised in that** the interface module (20) additionally has a virtual data set module (22) in which there is associated with the first control device (1) a data set receiving module (40) to which the first control device (1) can write a data set (60), and furthermore there is associated with the second controller (2), within the virtual data set module (22), a data set transmitting module (42) from which the second control device (2) can retrieve the data set (60), and at the same time the virtual data set module takes a form such that the data set (60) is copied from the data set receiving module (40) to the data set transmitting module (42), as a result of which a communication path is established between the control devices (1, 2).

2. Method for operating an automation system (50), wherein a first control device (1) and a second control device (2) exchange data with a peripheral assembly (10) over a field bus (3), wherein the data exchange relates on the one hand to transmitting output data to the peripheral module (20), wherein the output data is transferred to an input/output peripheral module (11) over an input/output module (21) in an interface module (20) of the peripheral assembly (10), and on the other hand to receiving input data from the peripheral module (20), wherein the input data is received from the input/output peripheral module (11), over the input/output module (21) in the interface module (20) of the peripheral assembly (10),
**characterised in that** there is operated in the interface module (20) a virtual data set module (22) in which there is associated with the first control device (1) a data set receiving module (40) to which the first control device (1) can write a data set (60), and furthermore there is associated with the second control device (2) a data set transmitting module (42) from which the second controller (2) can retrieve the data set (60'), and at the same time, in the virtual data set module (22), the data set (60) of the first control device (1) is copied from the data set receiving module (40) to the data set transmitting module (42), as a data set (60') for the second control device (2).

3. Method according to claim 2, wherein associating the data set receiving module (40) with the first control device (1) has the effect of forming a first channel (51) for the first control device (1), and associating the data set transmitting module (42) with the second control device (2) has the effect of forming a second channel (52) for the second control device (2), wherein the first control device (1) communicates with the second control device (2) by way of the peripheral module (20), over a data transmission path that includes the first channel (51) and the second channel (52).

## Revendications

1. Système (50) d'automatisation comprenant
- un premier dispositif (1) de commande ayant une première borne (31) de bus sur site,
- un deuxième dispositif (2) de commande ayant une deuxième borne (32) de bus sur site,
- un bus (3) sur site,
- un composant (10) périphérique ayant au moins un module (11) périphérique d'entrée/sortie de connexion de capteurs et/ou d'actionneurs, le composant (10) périphérique ayant un module (20) d'interface ayant une troisième borne (33) de bus sur site pour une communication vers les dispositifs (1, 2) de commande et/ou à partir de ceux-ci,
dans lequel le module (20) d'interface a au moins un module (21) d'entrée/sortie, dans lequel sont mises en mémoire des informations de connexion, les informations de connexion décrivant une association d'entrées/sorties du ou des modules (11) périphériques d'entrée/sortie avec les dispositifs (1, 2) de commande,
**caractérisé en ce que** le module (20) d'interface a, supplémentairement, un module (22) virtuel d'ensemble de données, dans lequel au premier dispositif (1) de commande est associé un module (40) de réception d'ensemble de données, dans lequel le premier dispositif (1) de commande peut écrire un ensemble (60) de données et, en outre, à la deuxième commande (2) est associé, au sein du module (22) virtuel d'ensemble de données, un module (42) d'envoi d'ensemble de données, par lequel le deuxième dispositif (2) de commande peut aller chercher l'ensemble (60) de données, le module virtuel d'ensemble de données étant conformé de manière à copier l'ensemble (60) de données du module (40) de réception d'ensemble de données dans le module (42) d'envoi d'ensemble de données, grâce à quoi un trajet de communication est réalisé entre les dispositifs (1, 2) de commande.

2. Procédé pour faire fonctionner un système (50) d'automatisation, dans lequel un premier dispositif (1) de commande et un deuxième dispositif (2) de commande échangent des données avec un composant (10) périphérique par l'intermédiaire d'un bus (3) sur site, l'échange de données se rapportant d'une part à l'envoi de données de sortie au module (20) périphérique, les données de sortie étant transmises à un module (11) périphérique d'entrée/sortie par l'intermédiaire d'un module (21) d'entrée/sortie d'un module (20) d'interface du composant (10) périphérique, et d'autre part se rapportant à une réception de données d'entrée par le module (20) périphérique, les données d'entrée étant reçues par le module (11) périphérique d'entrée/sortie par l'intermédiaire du module (20) d'interface du composant (10) périphérique,
**caractérisé en ce que** l'on fait fonctionner dans le module (20) d'interface un module (22) virtuel d'ensemble de données, dans lequel, au premier dispositif (1) de commande, est associé un module (40) de réception d'ensemble de données, dans lequel le premier dispositif (1) de commande peut écrire un ensemble (60) de données et, en outre, au deuxième dispositif (2) de commande, est associé un module (42) d'envoi d'un ensemble de données, par lequel la deuxième commande (2) peut aller chercher l'ensemble (60') de données, grâce à quoi, dans le module (62) virtuel d'ensemble de données, l'ensemble (60) de données du premier dispositif (1) de commande est copié à partir du module (40) de réception d'ensemble de données comme ensemble (60') de données pour le deuxième dispositif (2) de commande, dans le module (42) d'envoi d'un ensemble de données.

3. Procédé suivant la revendication 2, dans lequel, par l'association du module (40) de réception d'un ensemble de données au premier dispositif (1) de commande, on forme, pour le premier dispositif (1) de commande, un premier canal (51), et par l'association du module (42) d'envoi d'un ensemble de données au deuxième dispositif (2) de commande, on forme un deuxième canal (52) pour le deuxième dispositif (2) de commande, le premier dispositif (1) de commande communiquant par une section de transmission de données, qui a le premier canal (51) et le deuxième canal (52), avec le deuxième dispositif (2) de commande par l'intermédiaire du module (20) périphérique.
